# EUROPEAN PATENT SPECIFICATION

(11) **EP 2 193 315 B1**
(45) Date of publication and mention of the grant of the patent: **12.10.2011**
(21) Application number: 08798442.3
(22) Date of filing: 22.08.2008
(51) Int. Cl.: F25B 49/02

(54) **A VAPOR COMPRESSION SYSTEM AND METHOD OF CONTROLLING IT**
DAMPFKOMPRESSIONSANLAGE UND STEUERUNGSVERFAHREN DAFÜR
SYSTÈME DE COMPRESSION DE VAPEUR ET METHODE DE CONTROLE D'UN TEL SYSTÈME

(30) Priority: 24.08.2007 US 957940 P
(43) Date of publication of application: 09.06.2010
(73) Proprietor: Johnson Controls Technology Company, Holland, MI 49423 (US)
(72) Inventor: Kopko, William L., Jacobus, Pennsylvania 17407 (US); de la Cruz, Jose Ruel Yalung, Dover, Pennsylvania 17315 (US); Nickey, Glenn Eugene, New Oxford, Pennsylvania 17350 (US)
(74) Representative: Wolff, Felix
(86) International application number: PCT/US2008/073962
(87) International publication number: WO 2009/029506

(56) References cited:
- EP-A- 1 304 532
- DE-A1- 10 350 192
- JP-A- 2000 110 730
- US-A- 3 238 737
- US-A- 4 384 460
- US-A- 5 611 211

## Description

### BACKGROUND

The present disclosure relates generally to a vapor compression system and a method of controlling a such system.

In a multichannel heat exchanger or multichannel heat exchanger coil, a series of tube sections are physically and thermally connected by fins. The fins are configured to permit airflow through the multichannel heat exchanger and promote heat transfer to a circulating fluid, such as water or refrigerant, that is being circulated through the multichannel heat exchanger. The tube sections of the multichannel heat exchanger extend within the multichannel heat exchanger. Each tube section has several tubes or channels that circulate the fluid. The outside of each tube section may be a continuous surface with a generally oval or generally rectangular shape.

Multichannel heat exchangers may be used in residential, industrial or commercial heating, ventilation, air conditioning and refrigeration environments or other suitable vapor compression systems. A vapor compression system may include a compressor, a condenser, an expansion valve, and an evaporator to facilitate heat transfer in a cooling mode or heating mode. In vapor compression systems involving heat transfer, the condenser may operate as a heat exchanger.

Under low-ambient conditions, multichannel heat exchangers may be unable to maintain sufficient pressure, which can prevent proper operation of the vapor compression system.
US-A-4 384 460 shows a system according to the preamble of claim 1.

### SUMMARY

This disclosure is related to a vapor compression system that circulates a fluid through a closed loop interconnecting a compressor, a first heat exchanger, a flow-restricting expansion device, and a second heat exchanger. The system further includes a vessel in a first fluid communication and a selective second fluid communication with the loop between the compressor and the first heat exchanger with each of the first and second fluid communcation configured to receive fluid from the loop. The vessel is in a third fluid communication with the first heat exchanger configured to provide fluid to the first heat exchanger. In response to a predetermined ambient temperature surrounding the system, the second fluid communication is selectively opened to provide an increased fluid flow from the vessel to the first heat exchanger.

A yet further embodiment relates to a method of controlling a vapor compressor system that circulates a fluid through a closed loop interconnecting a compressor, a first heat exchanger, a flow-restricting expansion device, and a second heat exchanger. The method includes providing a vessel in a first fluid communication with the loop between the compressor and the first heat exchanger to receive fluid from the loop. The vessel is in a selective second fluid communication with at least one of: the loop between the compressor and the first heat exchanger; and the loop between the first and second heat exchanger; the second fluid communication to provide fluid to the vessel. The method further includes providing the vessel in a third fluid communication with the first heat exchanger to provide fluid to the first heat exchanger. The method further includes enabling each of the second and third fluid communication during operation of the compressor at less than a predetermined ambient temperature surrounding the system.

### BRIEF DESCRIPTION OF THE FIGURES

Figures 1 and 2 are illustrations of an exemplary vapor compression system disposed in a residential setting.

Figure 3 is an illustration of an exemplary vapor compression system disposed in a commercial setting.

Figure 4 is a schematic illustration of an exemplary vapor compression system according to an exemplary embodiment of the disclosure.

Figure 5 illustrates a top perspective view of an embodiment of a heat exchanger assembly of the present disclosure.

Figure 6 illustrates a top perspective view of an embodiment of a heat exchanger subassembly of the present disclosure.

Figure 7 illustrates an end view of an embodiment of a heat exchanger subassembly of the present disclosure.

Figure 8 is a schematic illustration of an exemplary vapor compression system according to an alternate embodiment of the disclosure.

Figure 9 illustrates an end view of an embodiment of a heat exchanger subassembly of the present disclosure.

### DETAILED DESCRIPTION OF THE EXEMPLARY EMBODIMENTS

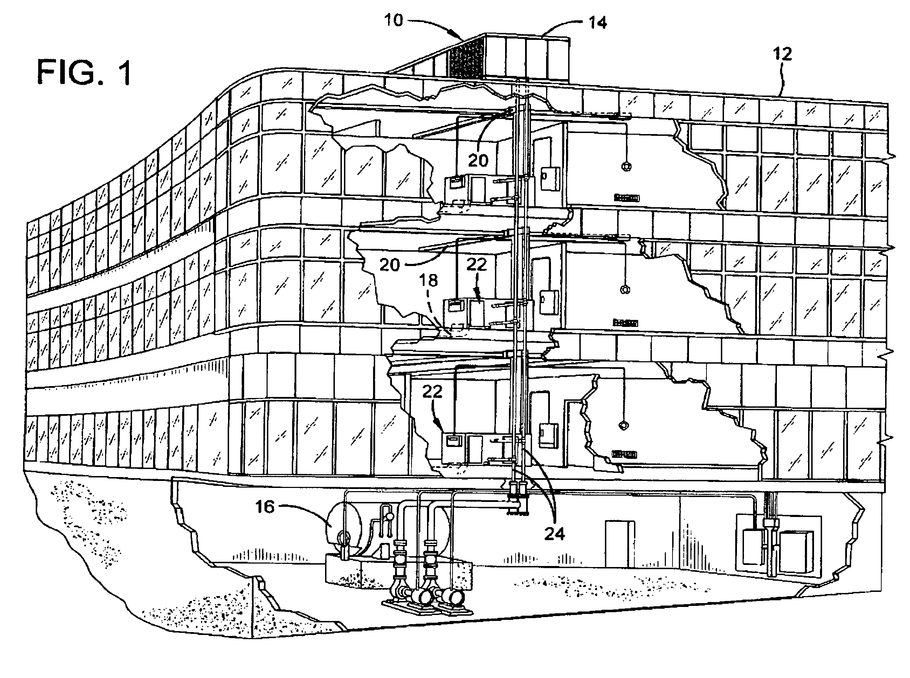

Referring to Figure 1, an exemplary environment for a vapor compression system 10, such as a heating, ventilation, air conditioning and refrigeration system, in a building 12 for a typical commercial setting is shown. Vapor compression system 10 may include a compressor incorporated into a rooftop unit 14 that may supply a chilled liquid that may be used to cool building 12. Vapor compression system 10 may also include a boiler 16 to supply a heated liquid that may be used to heat building 12, and an air distribution system that circulates air through building 12. The air distribution system may include an air return duct 18, an air supply duct 20 and an air handler 22. Air handler 22 may include a heat exchanger (not shown) that is connected to boiler 16 and rooftop unit 14 by conduits 24. The heat exchanger (not shown) in air handler 22 may receive either heated liquid from boiler 16 or chilled liquid from rooftop unit 14 depending on the mode of operation of vapor compression system 10. Vapor compression system 10 is shown with a separate air handler 22 on each floor of building 12. Several air handlers 22 may service more than one floor, or one air handler may service all of the floors.

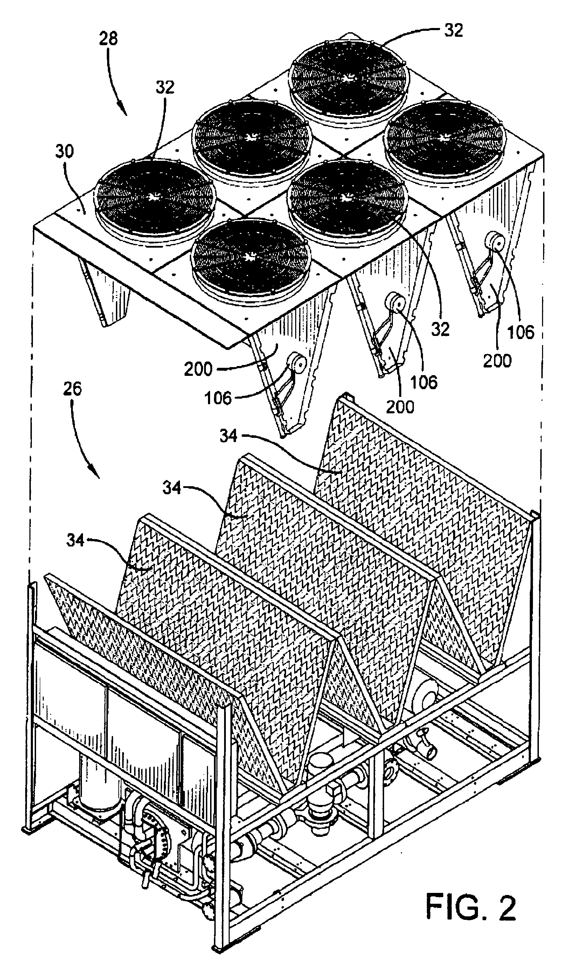

Figure 2 illustrates a partially exploded view of an exemplary heat exchanger 26 that may be used in the exemplary vapor compression system shown in Figure 1. Heat exchanger 26 may include an upper assembly 28 including a shroud 30 having one or more fans 32. The heat exchanger coils 34 may be disposed beneath shroud 30 and may be disposed above or at least partially above other system components, such as a compressor (not shown), an expansion device (not shown), and a control circuit (not shown). Coils 34 may be positioned at any angle between zero degrees and ninety degrees to provide enhanced airflow through coils 34 and to assist with the drainage of liquid from coils 34.

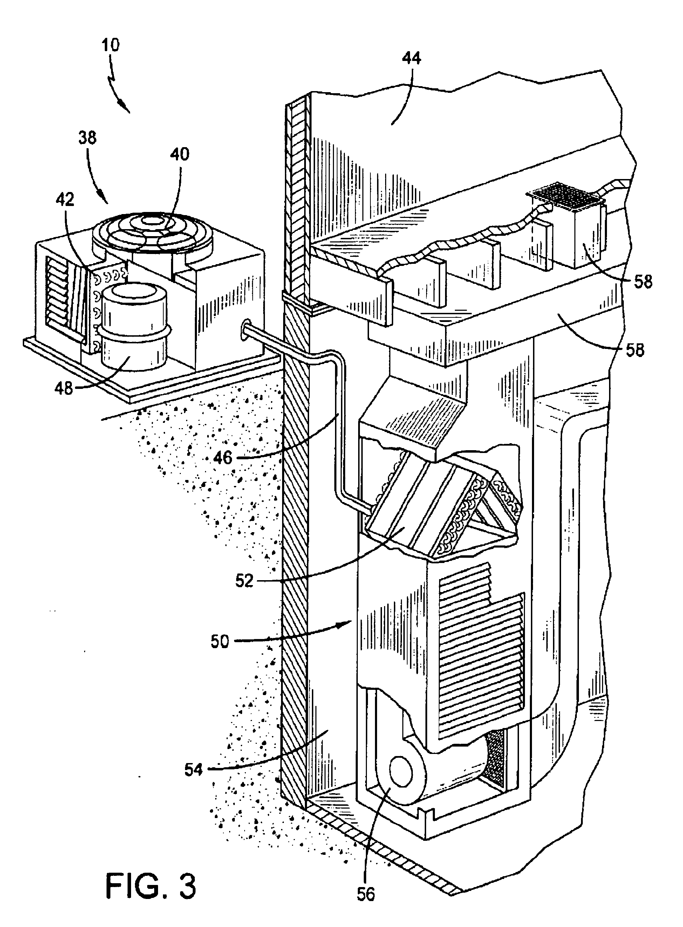

Referring to Figure 3, an exemplary environment for a vapor compression system 10 for a typical residential setting is shown. Vapor compression system 10 may include an outdoor unit 38 located outside of a residence 44 and an indoor unit 50 located inside residence 44. Outdoor unit 38 may include a fan 40 that draws air across coils 42 to exchange heat with refrigerant in coils 42 before the refrigerant enters residence 44 through lines 46. A compressor 48 may also be located in outdoor unit 38. Indoor unit 50 may include a heat exchanger 52 to provide cooling or heating to residence 44 depending on the operation of vapor compression system 10. Indoor unit 50 may be located in basement 54 of residence 44 or indoor unit 50 may be disposed in any other suitable location such as the first floor in a closet (not shown) of residence 44. Vapor compression system 10 may include a blower 56 and air ducts 58 to distribute the conditioned air (either heated or cooled) through residence 44. A thermostat (not shown) or other control may be used to control and operate vapor compression system 10.

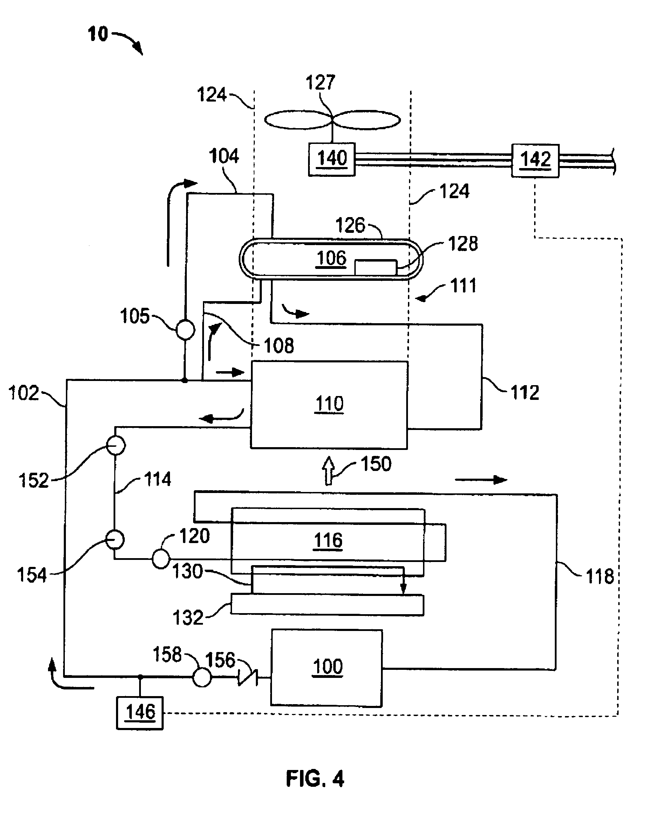

Figure 4 shows a schematic diagram of a vapor compression system 10, such as shown generally in Figure 1, with an embodiment of the disclosure. A compressor 100 pressurizes a fluid vapor, such as a refrigerant vapor and pumps the vapor through a discharge line 102. In one embodiment, the compressor is a tandem or trio compressor, which, in one embodiment, comprises multiple scroll compressors that are interconnected, acting as a single unit. A check valve 156 and a service valve 158 are located on the discharge side of compressor 100. When scroll compressors are used, there is normally at least one check valve for each compressor. In one embodiment, check valves 156 are located within the housing of each compressor. Most of the discharge refrigerant normally flows from compressor 100 into a heat exchanger 110 acting as a condenser, which in one embodiment is a multichannel heat exchanger 110.

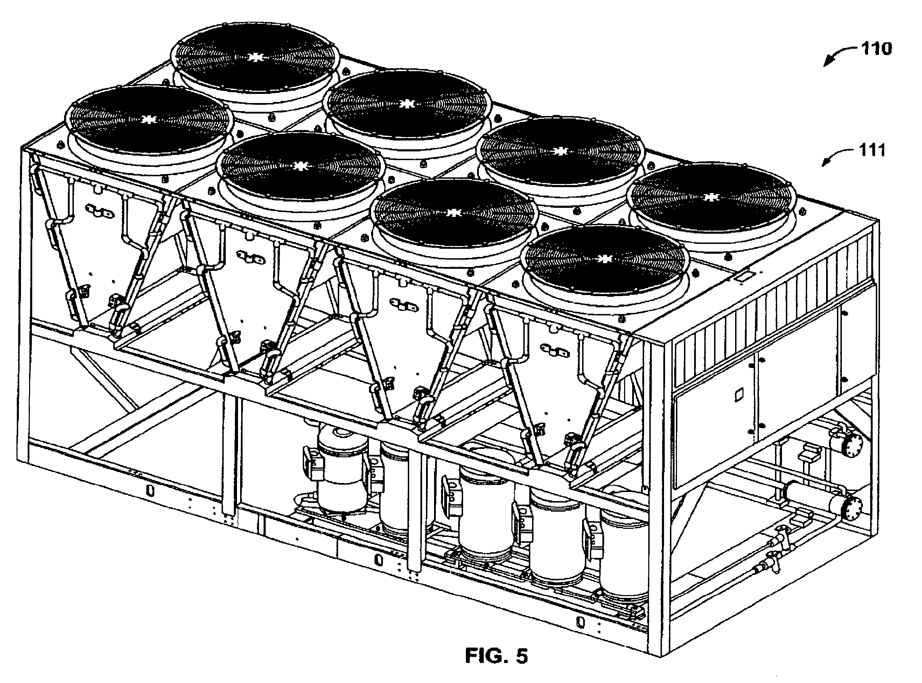

An embodiment of heat exchanger 110 is shown in Figure 5. In one embodiment, the refrigerant has at least two passes within heat exchanger 110, with the last pass providing subcooling. Refrigerant liquid exits heat exchanger 110 through a liquid line 114 to an expansion valve 120, which reduces the pressure of the refrigerant flowing into a heat exchanger 116 acting as an evaporator. In other words, liquid line 114 connects an outlet of heat exchanger 110 and an inlet of heat exchanger 116. Although identified as liquid line 114, under certain system operating conditions, an amount of vapor refrigerant may also travel through line 114. As shown in Figure 4, a manual service valve 152 and a liquid-line solenoid valve 154 are located in liquid line 114 between heat exchanger 110 and expansion valve 120. The boiling refrigerant in heat exchanger 116 cools a fluid stream 130 of a cooling load 132. For a chiller, the fluid stream is a liquid, such as water or brine, and heat exchanger 116 may be a shell-and-tube, plate or other heat exchanger construction. Refrigerant vapor exits heat exchanger 116 through a suction line 118 and returns to compressor 100, which completes vapor compression system 10. In other words, vapor compression system 10 includes a closed refrigerant loop interconnecting compressor 100, heat exchanger 110, a flow-restricting expansion device 120 and heat exchanger 116.

It should be noted that the present discussion makes use of the term "multichannel" tubes, coils or "multichannel heat exchanger" to refer to arrangements in which heat transfer tubes include a plurality of flow paths between manifolds that distribute flow to and collect flow from the tubes. A number of other terms may be used in the art for similar arrangements. Such alternative terms might include "microchannel" (sometimes intended to imply having fluid passages on the order of a micrometer and less), and "microport". Other terms sometimes used in the art include "parallel flow" and "brazed aluminum". However, all such arrangements and structures are intended to be included within the scope of the term "multichannel". In general, such "multichannel" tubes will include flow paths disposed along the width or in a plane of a generally flat, planar tube, although, again, the invention is not intended to be limited to any particular geometry unless otherwise specified in the appended claims. For example, U.S. Application No. 11/863,677, filed September 28, 2007, which is assigned to Applicant, is hereby incorporated by reference in its entirety.

A first hot-gas line 104 provides a flow path between discharge line 102 and with a vessel 106, sometimes referred to as a receiver, to receive refrigerant. In one embodiment, the connection for first hot-gas line 104 to vessel 106 is proximate to an upper portion of vessel 106. Line 104 provides supplemental hot refrigerant vapor to vessel 106 during operation at low ambient temperatures, for example, about 30 degrees F to about 40 degrees F. It is to be understood that upper and lower ranges can exceed these bounds in some embodiments. A solenoid valve 105 controls refrigerant flow through first hot-gas line 104. A second hot-gas line 108 also connects discharge line 102 and vessel 106. In one embodiment, the connection for second hot-gas line 108 is proximate to a lower portion of vessel 106. Line 108 provides a continuous flow of refrigerant vapor to vessel 106 whenever compressor 100 is operating. A refrigerant line 112 connects a lower portion of vessel 106 to the return end of heat exchanger 110. Under normal operating conditions, line 112 will deliver a flow of refrigerant from vessel 106 to heat exchanger 110 upstream of the subcooling section of heat exchanger 110. That is, for a two-pass heat exchanger 110, the end of line 122 opposite vessel 106 connects with heat exchanger 110 prior to the second pass (subcooling section) of the heat exchanger. In one embodiment, the location of the connection of line 122 and heat exchanger 110 is between the inlet and the outlet of heat exchanger 110, at which connection the refrigerant typically exists in a two-phase state in the heat exchanger.

As further shown, a layer of insulating material 126 substantially surrounds vessel 106. In one embodiment, insulating material 126 is closed-cell foam that is both water-resistant and weather-resistant and is capable of withstanding a wide range of temperatures. Closed-cell foam insulation works particularly well for cooler temperatures, and in one embodiment, is available in flexible sheets with different thickness, such as ¾ inch. A heater 128 is used to warm vessel 106. In one embodiment, heater 128 is a flexible electric heater that is encapsulated in silicone rubber and secured to the outside surface of the bottom of vessel 106, such as by adhesive, and then covered by insulating material 126.

In one embodiment, it has been found that a heater 128 having a heating capacity of about 100 watts is sufficient for a vessel 106 construction with outside dimensions of about 6 inches in diameter and a length of about 72 inches with about ¾ inch layer of insulating material 126 surrounding the vessel. For the exemplary vessel 106 embodiment, a nominal diameter of first hot-gas line 104 with the solenoid valve may be about 3/8 inch. A diameter of second hot-gas line 108 may be about ¼ inch. A length of lines 104, 108 may be from about 4 feet to about 12 feet. In the exemplary construction, the coil dimensions of heat exchanger 110 (see coils 34, Figure 2) may be configured in a rectangular frame that is about 48 inches in width with a tube length of about 80 inches and coil depth of about 1 inch. In one embodiment, the heat exchanger coil has two refrigerant passes, with about 20 percent to about 25 percent of the coils located in the second pass, which provides subcooling. Experiments using the exemplary embodiment have shown that the flow resistance of the lines in combination with the pressure drop through the heat exchanger coil provide adequate regulation of the flow of heated refrigerant vapor into vessel 106. It is to be understood that other size combinations of vessels, lines and coil constructions may also provide favorable results.

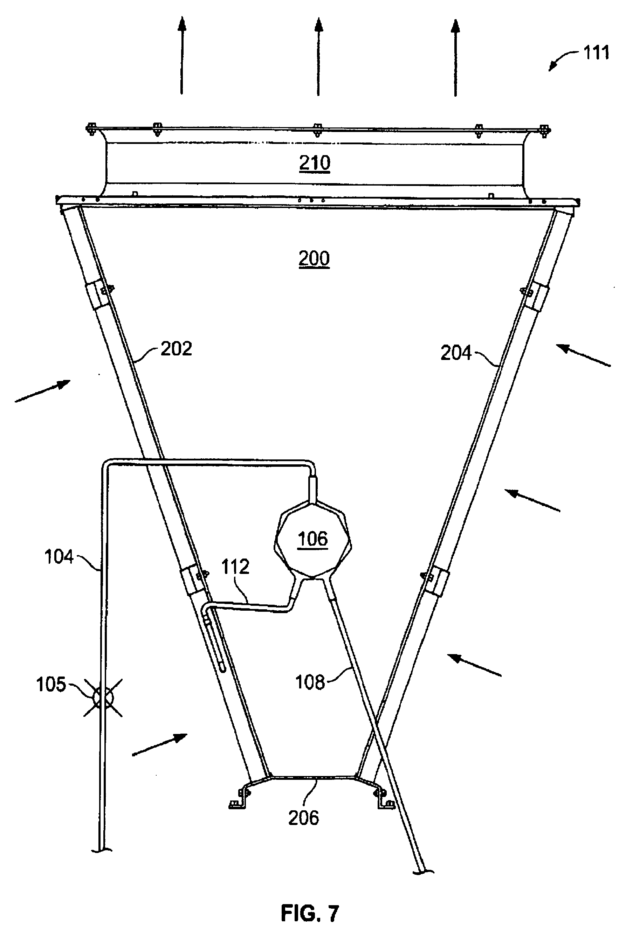

As shown in Figure 4, a fan 127 draws an air stream 150 through heat exchanger 110. In one embodiment, heat exchanger 110 comprises at least one multichannel coil. Air stream 150 is normally drawn from ambient air, flows through heat exchanger 110, over vessel 106, and then through fan 127 which discharges the air to the ambient air surrounding vapor compression system 10. An enclosure 124 surrounding heat exchanger 110, vessel 106 and fan 127 provides a flow path between heat exchanger 110 and fan 127 that is driven by a motor 140. Vessel 106 is preferably in air stream 150 downstream of heat exchanger 110. In other words, air stream 150 has already passed through condenser coils 202, 204 (Figure 7) prior to encountering vessel 106. The configuration helps to maintain heat exchanger 106 at a temperature near the condensing temperature of the refrigerant, which helps to prevent accumulation of refrigerant in vessel 106 during normal operation, while allowing refrigerant liquid to move into vessel 106 during pump-down, which is described in further detail below. The electrical output of an inverter 142 is electrically connected to the input terminals of motor 140 and provides variable-frequency power to motor 140. In one embodiment, a pressure transducer 146 is located along discharge line 102 and is in electrical communication with inverter 142. Pressure transducer 146 allows inverter 142 to modulate the speed of fan 127 in response to the discharge pressure in line 102 from compressor 100.

Inverter 142 is optional, but may be preferred for systems with one or two condenser fans 127. In systems with four or more condenser fans 127, it is usually possible to control condenser pressure by simply staging the number of operating fans 127, and use of an inverter 142 would typically result only in increased system cost and complexity.

During automatic pump-down, liquid-line solenoid valve 154 closes while compressor 100 continues to operate. The refrigerant condenses in heat exchanger 110 and backs up from the heat exchanger through refrigerant line 112 for storage in vessel 106. Likewise, for manual servicing or preparation for shipping, a technician can operate compressor 100 with manual service valve 152 closed to pump the refrigerant charge in the vessel for storage. Liquid-line solenoid valve 154 is normally open during a manual pump-down.

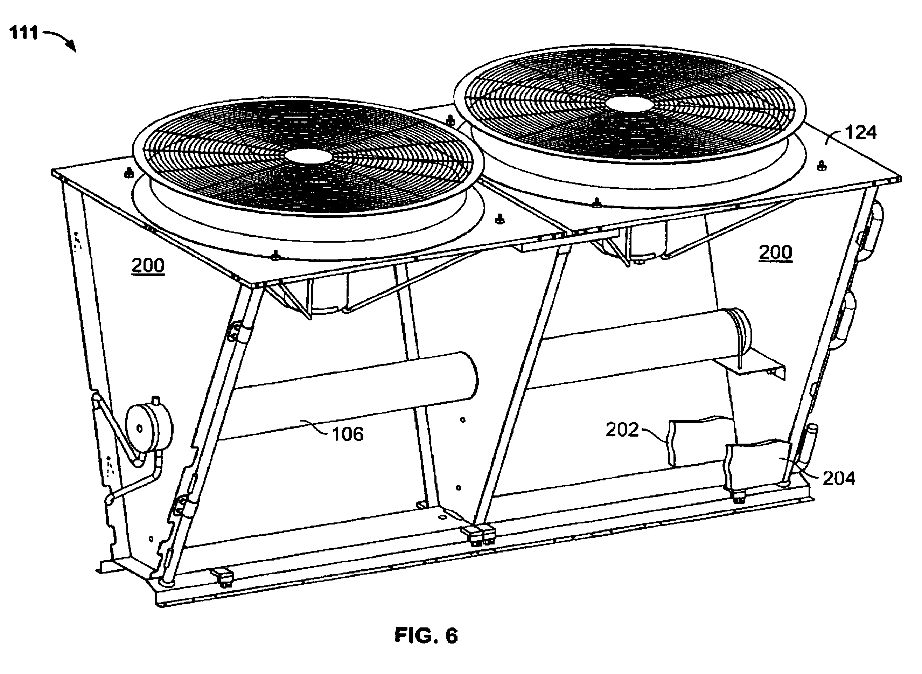

Figures 5 and 6 show one embodiment of a condenser subassembly 111. Vessel 106 is located so that one end extends through a "vee" panel 200 that is part of a sheet-metal enclosure defining a flow path between heat exchanger coils 202 and 204 and a fan 210. First hot-gas line 104 connects to the top of vessel 106. Solenoid valve 105 is located in the first hot-gas line. Second hot-gas line 108 connects to the bottom of vessel 106. A refrigerant line connects the bottom of vessel 106 to the bottom of the header of heat exchanger coil 112 located at the beginning of the subcooler pass. A channel 206 supports vee panel 200 and coils 202 and 204 and prevents bypass of air around the coils.

In one embodiment, vessel 106 is cylindrical with an inside diameter of less than 6 inches, which is not subject to the ASME pressure vessel code. In one embodiment, vessel 106 is preferably constructed of steel pipe with steel end pieces welded together to form a strong container for refrigerant.

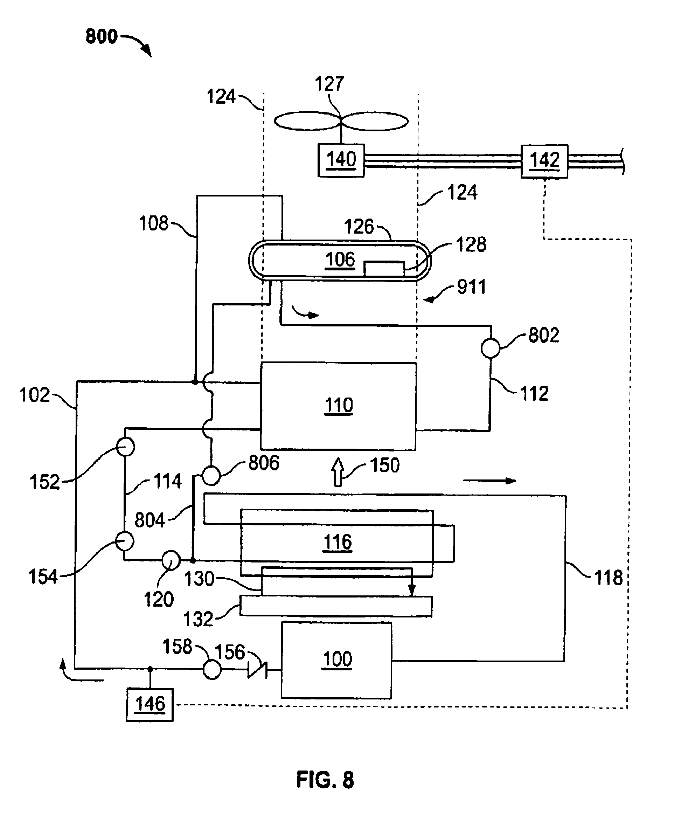

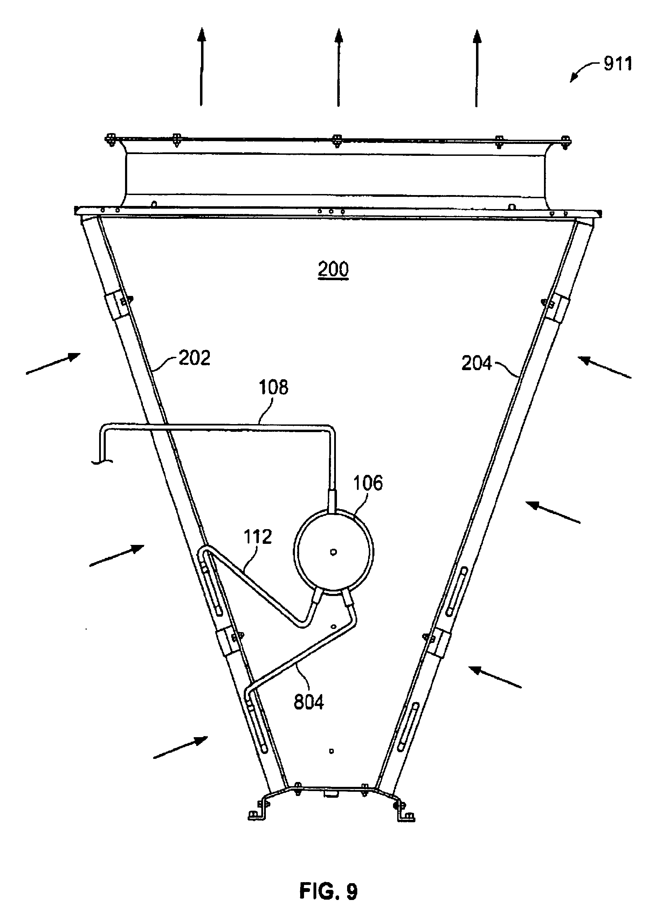

In an alternate embodiment, as shown in Figures 8 and 9, a vapor compression system 800 is otherwise substantially the same as vapor compression system 10, except as shown. Specifically, vessel 106 requires only one hot-gas line 108 between vessel 106 and the discharge side of compressor 100. One drain line 804 selectably connects vessel 106 to the inlet side of heat exchanger 116 for selectably providing flow of refrigerant to heat exchanger 116. As with the previous embodiment, heat exchanger 116 serves as an evaporator to cool cooling load 132. A valve 806, such as a solenoid valve, is disposed along line 804 to selectably connect vessel 106 to the upstream side of heat exchanger 116 for selectably providing flow of refrigerant to the heat exchanger acting as an evaporator. Line 112, which is disposed between vessel 106 and upstream of the subcooling section of heat exchanger 110 acting as a condenser, selectably provides flow of refrigerant to heat exchanger 110. An optional valve 802, such as a solenoid valve, is disposed along line 112 to selectably connect vessel 106 to heat exchanger 110 for selectably providing flow of refrigerant to heat exchanger 110. That is, in an alternate embodiment, valve 802 is not required, providing a continuously open connection between vessel 106 and heat exchanger 110 through line 112.

In response to low-ambient conditions surrounding vapor compression system 800, valves 802 and 806 are opened, opening lines 112 and 804 to permit the flow of refrigerant from vessel 106, ensuring that the adequate heat exchanger 110 (condenser) pressure is maintained for proper operation of the vapor compression system at low ambient temperatures. In one embodiment, with an ambient temperature of 0 degrees F, vessel 106 operated properly without inclusion of either a heater 128 or a layer of insulating material 126 surrounding vessel 106. It is to be understood that in other embodiments, the vapor compression system may continue to operate properly in ambient temperatures less than 0 degrees F, with further reduction in ambient temperature possible with the addition of heater 128 and/or a layer of insulating material 126 surrounding vessel 106.

In one embodiment, valves 802, 806 may be electronic expansion valves or thermal expansion valves. In one embodiment, one or more of the thermal expansion valves 802, 806 include a bulb (not shown) that is connected, such as via a capillary tube (not shown), to an upper portion of the valves. The bulb is disposed in fluid communication with the suction line to the compressor, the pressure difference between the refrigerant in the bulb and the refrigerant in the heat exchanger (evaporator) being used to open the valve. If a migrating charge is used for the bulb, then a heater may be fitted to the top of the head of the thermal expansion valve to improve operation at lower ambient temperatures. In alternate embodiments, a non-migrating charge may be used instead of the connection with the compressor suction line, or an electronic expansion valve may be used. In a further embodiment, the embodiments of Figures 4 and 8 may be combined.

### DESCRIPTION OF THE OPERATION OF THE CONTROLS

Table 1 summarizes the control logic for the vessel heater and the solenoid that controls hot gas to the vessel for the vapor compression system construction of Figure 4. The heater and the solenoid are not energized until the ambient temperature is less than a specified minimum value, typically about 32 degrees F to about 45 degrees F. Below the exemplary temperature range, the heater should normally be energized when a compressor in the exemplary refrigeration circuit is not operating. The hot-gas valve for the vessel is energized to cause the valve to open whenever any compressor in the refrigerant circuit is operating. In one embodiment, both heater 128 and solenoid valve 152 (Figure 4) are de-energized, that is, closed, when the compressor(s) are running. Likewise, it is not typically necessary to de-energize solenoid valve 152 when compressor 100 is not operating.

**Table 1**

| Ambient Temperature | Compressor | Hot-Gas Solenoid to Vessel | Vessel Heater |
|---|---|---|---|
| > minimum temperature | ON or OFF | OFF | OFF |
| < minimum temperature | ON | ON | OFF |
| < minimum temperature | OFF | OFF | ON |

Regulation of the amount of refrigerant liquid in vessel 106 is desirable to maintaining control of condensing pressure, which control is necessary for operating refrigeration equipment at low ambient temperatures. As previously described in an earlier embodiment, a continuously open line connection 108 between compressor 100 and vessel 106 may be adequate for maintaining control of the amount of refrigerant liquid in vessel 106 during normal ambient temperatures. At lower ambient temperatures (for example, less than about 30 degrees F to about 40 degrees F), refrigerant liquid tends to remain in vessel 106 during start-up. Maintaining too much liquid refrigerant in vessel 106 also tends to reduce condensing pressure and results in little or no subcooling of the refrigerant, both of which prevent an adequate amount of refrigerant from reaching heat exchanger 116 through the expansion valve 120, reducing cooling capacity of the system.

One partial solution is warm vessel 106 before start-up at low ambient temperatures. In one embodiment, vessel 106 may be warmed using a heater 128 or a combination of a heater 128 and insulation layer 126. In one embodiment, the open refrigerant connections are disposed adjacent to the lower portion of vessel 106, minimizing convection of refrigerant inside of vessel 106. The exemplary arrangement of receiver lines 108, 112 may increase the temperature of vessel 106 and reduce the amount of refrigerant liquid contained within vessel 106 at start-up, both of which assist with start-up at low ambient temperature conditions. However, large heaters may require excessive power input, which increases energy use and adds cost for larger control transformers. In addition, heaters alone may not be able to provide adequate control over the vessel at lower ambient temperature conditions.

Another partial solution is to warm vessel 106 with additional hot refrigerant vapor. The additional hot refrigerant vapor warms vessel 106 and helps to move liquid away from vessel 106 during start-up of vapor compression system 10. However, additional hot refrigerant vapor alone may be inadequate to assure reliable operation under all start-up conditions.

The combination of hot refrigerant vapor and heaters 128 appears to provide superior performance. The exemplary combination provides reliable start up even at 0 degrees F ambient temperature conditions without requiring excessive heater power. The solution appears to provide an optimum combination of cost and performance for vessel 106 constructions, such as shown in Figure 4.

Table 2 summarizes the control logic for vessel 106 and solenoids 802. 806 that control the discharge connections or lines 112 and 804 between vessel 106 and heat exchanger 110 (condenser), and between the vessel and heat exchanger 116 (evaporator), respectively (Figure 8). The solenoids 802, 806 are not energized until the ambient temperature is less than a specified minimum value, such as about 0 degrees F. Below about 0 degrees F, a heater 128 and/or insulating material 126 may also be required, although in one application, neither a heater nor insulating material was required for vessel 106 with ambient conditions of 0 degrees F.

**Table 2**

| Ambient Temperature | Compressor | Solenoids Valve Position |
|---|---|---|
| > minimum temperature | ON or OFF | Closed |
| < minimum temperature | ON | Open |

A control point of about 40 degrees F worked well with the exemplary embodiment. A deadband of several degrees F may be included to prevent rapid cycling of the valve.

Start up conditions usually create the most challenging operating conditions associated with control of refrigerant at lower ambient temperatures. In some cases it may be necessary to open the solenoid during start-up to prevent excess accumulation of liquid refrigerant in the receiver. A timer may be used to energize the solenoid for about the first several minutes (for example, 5 minutes) of operation of the refrigerant circuit, regardless of ambient temperature. At lower ambient temperatures, the solenoid would continue to operate as described above.

In an alternate embodiment, a more sophisticated control may be used that optimizes the operation of the solenoid as a function of ambient conditions and start up conditions. In a further embodiment, the liquid level in the vessel may be measured directly and used to control the operation of the solenoid.

While only certain features and embodiments of the invention have been shown and described, many modifications and changes may occur to those skilled in the art (e.g., variations in sizes, dimensions, structures, shapes and proportions of the various elements, values of parameters (e.g., temperatures, pressures, etc.), mounting arrangements, use of materials, colors, orientations, etc.) without materially departing from the novel teachings and advantages of the subject matter recited in the claims. The order or sequence of any process or method steps may be varied or re-sequenced according to alternative embodiments. It is, therefore, to be understood that the appended claims are intended to cover all such modifications and changes as fall within the true spirit of the invention. Furthermore, in an effort to provide a concise description of the exemplary embodiments, all features of an actual implementation may not have been described (i.e., those unrelated to the presently contemplated best mode of carrying out the invention, or those unrelated to enabling the claimed invention). It should be appreciated that in the development of any such actual implementation, as in any engineering or design project, numerous implementation specific decisions may be made. Such a development effort might be complex and time consuming, but would nevertheless be a routine undertaking of design, fabrication, and manufacture for those of ordinary skill having the benefit of this disclosure, without undue experimentation.

## Claims

1. A vapor compression system (10) that circulates a fluid through a closed loop interconnecting a compressor (100), a first heat exchanger (110), a flow-restricting expansion device (120), and a second heat exchanger (116), the system further comprising a vessel (106), **characterised in that** the vessel (106) is in a first fluid communication and a selective second fluid communication with the loop between the compressor (100) and the first heat exchanger (110) with each of the first and second fluid communication configured to receive fluid from the loop, the vessel (106) is in a third fluid communication with the first heat exchanger (110) configured to provide fluid to the first heat exchanger (110); and
wherein in response to a predetermined ambient temperature surrounding the system, the second fluid communication is selectively opened to provide an increased fluid flow from the vessel (106) to the first heat exchanger (110).

2. The system of claim 1, wherein the second fluid communication includes a solenoid valve (105).

3. The system of claim 1, wherein the vessel (106) includes a heather (128).

4. The system of clam 3, wherein the third fluid communication with the first heat exchanger (110) is upstream of a subcooling section of the first heat exchanger (110).

5. The system of claim 4, wherein the vessel (106) is disposed downstream of a forced fluid stream flowing through coils of the first heat exchanger (110), wherein a magnitude of the forced fluid stream is modulated in response to a predetermined discharge pressure from the compressor (100).

6. The system of claim 1, wherein the first heat exchanger (110) is a multichannel condenser and the second heat exchanger (116) is an evaporator.

7. The system of claim 1, wherein the first heat exchanger (110) is a multichannel heat exchanger.

8. The system of claim 1, wherein liquid fluid is drained from the vessel (106) through the second fluid communication to an inlet of the second heat exchanger (116).

9. A method of controlling a vapor compressor system (10) that circulates a fluid through a closed loop interconnecting a compressor (100), a first heat exchanger (110), a flow-restricting expansion device (120), and a second heat exchanger (116), the method **characterised in** :
providing a vessel (106) in a first fluid communication with the loop between the compressor (100) and the first heat exchanger (110) to receive fluid from the loop, the vessel (106) in a selective second fluid communication by a valve (105) with at least one of:
the loop between the compressor (100) and the first heat exchanger (110); and
the loop between an outlet of the first heat exchanger (110) and an inlet of the second heat exchanger (116); the second fluid communication to provide fluid to the vessel (106); and
providing the vessel (106) in a third fluid communication with the first heat exchanger (110); and
enabling the second fluid communication during operation of the compressor (100) at less than a predetermined ambient temperature surrounding the system (10).

10. The method of claim 9, wherein the step of enabling includes enabling a solenoid valve (105) associated with the second fluid communication.

11. The method of claim 9, wherein the step of providing includes a thermal expansion valve (802) having a heater (128), the heater (128) enabling each of the second and third fluid communication during operation of the compressor (100) at less than a predetermined ambient temperature surrounding the system (10).

## Patentansprüche

1. Dampfkompressionssystem (10), das ein Fluid durch einen geschlossenen Regelkreis zirkuliert, der einen Kompressor (100), einen ersten Wärmetauscher (110), eine Strömungsbegrenzungs-Ausdehnungsvorrichtung (120) und einen zweiten Wärmetauscher (116) miteinander verbindet, wobei das System ferner ein Gefäß (106) umfasst,
**dadurch gekennzeichnet, dass** sich das Gefäß (106) in einer ersten Fluidübertragungsverbindung und einer selektiven zweiten Fluidübertragungsverbindung zu dem Kreis zwischen dem Kompressor (100) und dem ersten Wärmetauscher (110) befindet, wobei die erste und die zweite Fluidübertragungsverbindungen jeweils so konfiguriert sind, dass sie Fluid von dem Kreis empfangen, wobei sich das Gefäß (106) in einer dritten Fluidübertragungsverbindung zu dem ersten Wärmetauscher (110) befindet, mit einer Konfiguration zum Bereitstellen von Fluid an den ersten Wärmetauscher (110); und
wobei als Reaktion auf eine erste vorbestimmte Umgebungstemperatur, welche das System umgibt, die zweite Fluidübertragungsverbindung selektiv geöffnet wird, um eine erhöhte Fluidströmung von dem Gefäß (106) an den ersten Wärmetauscher (110) bereitzustellen.

2. System nach Anspruch 1, wobei die zweite Fluidübertragungsverbindung ein Solenoidventil (105) aufweist.

3. System nach Anspruch 1, wobei das Gefäß (1069 eine Heizeinrichtung (128) aufweist.

4. System nach Anspruch 3, wobei sich die dritte Fluidübertragungsverbindung zu dem ersten Wärmetauscher (110) stromaufwärts eines Unterkühlungsabschnitts des ersten Wärmetauschers (110) befindet.

5. System nach Anspruch 4, wobei das Gefäß (106) stromabwärts eines erzwungenen, durch Spulen des ersten Wärmetauschers (110) fließenden Fluidstroms angeordnet befindet, wobei eine Stärke des erzwungenen Fluidstroms als Reaktion auf einen vorbestimmten Abgabedruck von dem Kompressor (100) moduliert wird.

6. System nach Anspruch 1, wobei es sich bei dem ersten Wärmetauscher (110) um einen Mehrkanalkondensator handelt, und wobei es sich bei dem zweiten Wärmetauscher (116) um einen Evaporator handelt.

7. System nach Anspruch 1, wobei es sich bei dem ersten Wärmetauscher (110) um einen Mehrkanal-Wärmetauscher handelt.

8. System nach Anspruch 1, wobei flüssiges Fluid aus dem Gefäß (106) durch die zweite Fluidübertragungsverbindung zu einem Einlass des zweiten Wärmetauschers (116) ausgelassen wird.

9. Verfahren zur Steuerung eines Dampfkompressionssystems (10), das ein Fluid durch einen geschlossenen Regelkreis zirkuliert, der einen Kompressor (100), einen ersten Wärmetauscher (110), eine Strömungsbegrenzungs-Ausdehnungsvorrichtung (120) und einen zweiten Wärmetauscher (116) miteinander verbindet, wobei das Verfahren **gekennzeichnet ist durch**:
das Bereitstellen eines Gefäßes (106) in einer ersten Fluidübertragungsverbindung mit dem Kreis zwischen dem Kompressor (100) und dem ersten Wärmetauscher (110), um Fluid aus dem Kreis aufzunehmen, wobei sich das Gefäß (106) in einer selektiven zweiten Fluidübertragungsverbindung über das Ventil (105) mit mindestens einer der folgenden Optionen befindet:
dem Kreis zwischen dem Kompressor (100) und dem ersten Wärmetauscher (110); und
dem Kreis zwischen einem Auslass des ersten Wärmetauschers (110) und einem Einlass des zweiten Wärmetauschers (116); wobei die zweite Fluidübertragungsverbindung Fluid an das Gefäß (106) bereitstellt; und
das Bereitstellen des Gefäßes (106) in einer dritten Fluidübertragungsverbindung zu dem ersten Wärmetauscher (110); und
das Aktivieren der zweiten Fluidübertragungsverbindung während dem Betrieb des Kompressors (100) auf einer Temperatur, die niedriger ist als die das System (10) umgebende vorbestimmte Umgebungstemperatur.

10. Verfahren nach Anspruch 9, wobei der Schritt des Aktivierens das Aktivieren eines Solenoidventils (105) aufweist, das der zweiten Fluidübertragungsverbindung zugeordnet ist.

11. Verfahren nach Anspruch 9, wobei der Schritt des Bereitstellens ein Wärmeausdehnungsventil (802) mit einer Heizeinrichtung (128) aufweist, wobei die Heizeinrichtung (128) jeweils die zweiten und dritten Fluidübertragungsverbindungen während dem Betrieb des Kompressors (100) auf einer Temperatur aktiviert, die niedriger ist als die das System (10) umgebende vorbestimmte Umgebungstemperatur.

## Revendications

1. Système à compression de vapeur (10) qui fait circuler un fluide à travers une boucle fermée interconnectant un compresseur (100), un premier échangeur thermique (110), un dispositif d'extension limiteur de flux (120) et un second échangeur thermique (116), le système comprenant en outre un récipient (106),
**caractérisé en ce que** le récipient (106) est dans une première communication fluidique et une deuxième communication fluidique sélective avec la boucle entre le compresseur (100) et le premier échangeur thermique (110), chacune des première et deuxième communications fluidiques étant configurée pour recevoir du fluide de la boucle, le récipient (106) est dans une troisième communication fluidique avec le premier échangeur thermique (110) configuré pour fournir du fluide au premier échangeur thermique (110) ; et
dans lequel en réponse à une température ambiante prédéterminée entourant le système, la deuxième communication fluidique est sélectivement ouverte pour fournir un flux de fluide accru depuis le récipient (106) vers le premier échangeur thermique (110).

2. Système selon la revendication 1, dans lequel la deuxième communication fluidique comprend une électrovanne (105).

3. Système selon la revendication 1, dans lequel le récipient (106) comprend un dispositif de chauffage (128).

4. Système selon la revendication 3, dans lequel la troisième communication fluidique avec le premier échangeur thermique (110) est en amont d'une section de sous-refroidissement du premier échangeur thermique (110).

5. Système selon la revendication 4, dans lequel le récipient (106) est disposé en aval d'un flux de fluide forcé circulant à travers les bobines du premier échangeur thermique (110), dans lequel une magnitude du flux de fluide forcé est modulée en réponse à une pression de décharge prédéterminée du compresseur (100).

6. Système selon la revendication 1, dans lequel le premier échangeur thermique (110) est un condensateur à plusieurs canaux et le second échangeur thermique (116) est un évaporateur.

7. Système selon la revendication 1, dans lequel le premier échangeur thermique (110) est un échangeur thermique à plusieurs canaux.

8. Système selon la revendication 1, dans lequel le fluide liquide est évacué du récipient (106) à travers la deuxième communication fluidique vers une entrée du second échangeur thermique (116).

9. Procédé pour commander un système à compression de vapeur (10) qui fait circuler un fluide à travers une boucle fermée interconnectant un compresseur (100), un premier échangeur thermique (110), un dispositif d'extension limiteur de flux (120) et un second échangeur thermique (116), le procédé comprenant les étapes consistant à :
fournir un récipient (106) dans une première communication fluidique avec la boucle entre le compresseur (100) et le premier échangeur thermique (110) pour recevoir le fluide de la boucle, le récipient (106) étant dans une deuxième communication fluidique sélective par une vanne (105) avec au moins :
la boucle entre le compresseur (100) et le premier échangeur thermique (110) ; ou
la boucle entre une sortie du premier échangeur thermique (110) et une entrée du second échangeur thermique (116) ; la deuxième communication fluidique fournissant du fluide au récipient (106) ; et
fournir le récipient (106) dans une troisième communication fluidique avec le premier échangeur thermique (110) ; et
activer la deuxième communication fluidique pendant le fonctionnement du compresseur (100) à une température inférieure à une température ambiante prédéterminée entourant le système (10).

10. Procédé selon la revendication 9, dans lequel l'activation comprend l'étape consistant à activer une électrovanne (105) associée à la deuxième communication fluidique.

11. Procédé selon la revendication 9, dans lequel la fourniture comprend une vanne d'expansion thermique (802) ayant un dispositif de chauffage (128), le dispositif de chauffage (128) activant chacune des deuxième et troisième communications de fluide pendant le fonctionnement du compresseur (100) à une température inférieure à une température ambiante prédéterminée entourant le système (10).
